# EUROPEAN PATENT SPECIFICATION

(11) **EP 2 091 342 B1**
(45) Date of publication and mention of the grant of the patent: **03.08.2011**
(21) Application number: 07847333.7
(22) Date of filing: 26.11.2007
(51) Int. Cl.: A23D 7/005, A23D 7/015, A23D 7/05

(54) **PROCESS FOR THE PREPARATION OF AN ACIDIFIED WATER CONTINUOUS EMULSION**
VERFAHREN ZUR HERSTELLUNG EINER ANGESÄUERTEN EMULSION MIT GESCHLOSSENER WASSERPHASE
PROCÉDÉ DE PRÉPARATION D'UNE ÉMULSION CONTINUE AQUEUSE ACIDIFIÉE

(30) Priority: 14.12.2006 EP 06126090
(43) Date of publication of application: 26.08.2009
(73) Proprietor: Unilever N.V., 3013 AL Rotterdam (NL); Unilever PLC, London EC4Y 0DY (GB)
(72) Inventor: BOT, Arjen, 3133 AT Vlaardingen (NL); RESZKA, Aleksander Arie, 3133 AT Vlaardingen (NL); ZUIJDERVLIET, Cornelis Antonius Maria, 3133 AT Vlaardingen (NL)
(74) Representative: Rosen Jacobson, Frans Lucas M.
(86) International application number: PCT/EP2007/062797
(87) International publication number: WO 2008/071536

(56) References cited:
- EP-A2- 0 293 980
- WO-A-2005/041676
- US-B1- 6 322 842
- US-B1- 6 447 831
- US-B1- 6 468 578

## Description

### Field of the invention

The invention relates to a process for the preparation of an edible water continuous emulsion.

### Background prior art

Water continuous acidified emulsions as food product are prepared starting from a fat phase and an aqueous phase, and have been used for example as spreads on a variety of food products. Such spreads are for example popular as an under layer on bread, toast or the like; or are used as such. These spreads in some aspects resemble well known products as fresh cheese and other dairy products.

Spreads should have a good mouthfeel, e.g. a smooth texture with no perceivable grainy structures. In addition the product should have a certain firmness to it and show low or no syneresis upon temperature cycling.

Water continuous acidified emulsion spreads are usually made with a process that involves two homogenization steps. The two homogenization steps are necessary to get a good quality product, e.g. smooth texture.

See for example WO-A-03/043430 which describes a process for the preparation of a water continuous acidified food product that involves the preparation of a mixture comprising a fat phase and an aqueous phase, pasteurizing or sterilizing the mixture, homogenizing the mixture a first time at elevated temperatures, acidifying the mixture (at elevated temperature) and homogenizing the mixture a second time.

As described above the preparation of a mixture (premix) comprising a fat phase and an aqueous phase is followed by a first homogenization. This is usually done at elevated temperatures at which temperature part or all of the fat is liquid. This is then followed by acidification. When chemical acidification is used this is usually done at elevated temperatures, e.g. 60 degrees Celsius or higher. A second homogenization then follows, to provide a water continuous emulsion with the desired product properties such as a smooth texture, certain firmness and low syneresis. Eliminating the first homogenization may lead to products of lower quality as the texture of the product obtained tends to be less smooth, i.e. comprises perceivable grainy structures, something that is less desired by consumers. This is especially so if the emulsion comprises a system reconstituted from milk powder.

It is desirable that the process used contains a limited number of process steps and/or relatively simple process steps as this provides for example for simpler manufacturing or energy savings.

For example, it is desirable to use a chemical agent for the acidification instead of fermentation (i.e. using cultures) as the latter is for example more time consuming and involves the handling of bacteria.

Also, it is desirable to use ingredients in a dry powder format, e.g. protein in the form of milk powder, as this is more convenient from a sourcing perspective.

Furthermore, homogenization is a relatively cumbersome process step as mechanical failure of the equipment used for homogenization is more likely than with other equipment such as heat exchangers. Therefore, it would be desirable to minimize the number of homogenization steps, for example to one. WO-A-2005/041676 discloses a process for the preparation of a water continuous acidified emulsion comprising one homogenization step and acidification using fermentation or a chemical agent both at elevated temperatures.

A drawback of preparing water continuous acidified emulsions comprising systems reconstituted from milk powder while using one homogenization step is that the products may suffer from perceivable grainy structures.

It has now been surprisingly found that acidification of the emulsion at low temperature allows the use of only one emulsification step, while still providing emulsions with good texture, e.g. no perceivable grainy structures.

It is thus an object of the present invention to provide a process for the preparation of water continuous acidified emulsions that have a smooth texture, e.g. do not comprise perceivable grainy structures.

It is another object of the present invention to provide a process for the preparation of water continuous acidified emulsions comprising systems reconstituted from milk powder.

It is also another object of the present invention to provide a process for the preparation of water continuous acidified emulsions that have the most important consumer attributes of the prior art food products, e.g. firmness, low or no syneresis.

It is yet another object of the present invention to provide an improved process to prepare water continuous acidified emulsions comprising less and/or simpler process steps.

It is still another object of the present invention to provide a process for the preparation of water continuous acidified emulsions that involves only one homogenization step.

It is yet still another object of the present invention to provide an improved process to prepare water continuous acidified emulsions that consumes less energy.

### Summary of the invention

One or more of the above objects is attained by a process for the preparation of an edible water continuous acidified emulsion, wherein the process comprises the steps of the
(a) preparation of an emulsion comprising an aqueous phase, a fat phase and protein wherein at least 25 wt% of the protein is from milk powder;
(b) acidification of the emulsion obtained under (a) to a pH between 4.4 and 5.2 with a chemical agent at a temperature equal to or lower than T with a minimum of 0 degrees Celsius, wherein T=A + B*(pH-4.7) with a maximum of 20 degrees Celsius, wherein B=15 degrees Celsius for a pH from 4.4 up to and including 4.7, wherein B=45 degrees Celsius for a pH from 4.7 up to and including 5.2, and wherein A is from 10 to 5 degrees Celsius, preferably 8 to 5 degrees Celsius and most preferably 6 to 5 degrees Celsius;
(c) emulsification of the emulsion obtained under (b).

### Detailed description of the invention

The emulsion of the present invention is an edible water continuous acidified emulsion and may be used as a spread, a semi-solid acidified cream or as a drink type product. The emulsion essentially comprises fat and protein dispersed in an aqueous system.

The process according to the invention comprises the preparation, acidification and emulsification of a water continuous emulsion.

First a water continuous emulsion is prepared comprising an aqueous phase, fat phase and protein. When preparing the emulsion part or all of the protein may be comprised in the aqueous phase and/or part or all of the protein may be added separately, e.g. in a separate phase or as the protein per se. Optionally other ingredients such as thickeners and preservatives may be added, either to the emulsion and/or to the aqueous phase and/or fat phase.

The emulsion is prepared by mixing the ingredients, e.g. aqueous phase, fat phase and protein. This is suitably done at elevated temperatures to allow for a good mixing of the ingredients. However, it may be preferred to prepare the emulsion at low temperature, e.g. without heating, hence further simplifying the process. When the emulsion is prepared at low temperature the fat composition should be such that the solid fat content at the given temperature is 15 % or less, preferably 10 % or less and more preferably 5 % or less.

The temperature at which the acidification takes place should be equal to or lower than T with a minimum of 0 degrees Celsius, wherein T=A + B*(pH-4.7) with a maximum of 20 degrees Celsius, wherein B=15 degrees Celsius for a pH from 4.4 up to and including 4.7, wherein B=45 degrees Celsius for a pH from 4.7 up to and including 5.2, and wherein A is from 10 to 5 degrees Celsius, preferably 8 to 5 degrees Celsius and most preferably 6 to 5 degrees Celsius.

Hence, for a given pH the temperature should be equal to or lower than A + B*(pH-4.7), wherein the temperature at which the acidification takes place is at least 0 degrees Celsius. If the temperature according to the formula A + B*(pH-4.7) is higher than 20 degrees Celsius the temperature at which the acidification takes place is maximized at 20 degrees Celsius.

For example, for acidification to a pH of 4.7 with B=45 and A=10 the formula gives a temperature of 10 degrees Celsius. The temperature at which the acidification may take place is then from 0 to 10 degrees Celsius.

However, for acidification to a pH of 5 with B=45 and A=10 the formula gives a temperature of 23.5 degrees Celsius, which is then maximized at 20 degrees Celsius. The temperature at which the acidification may take place is then from 0 to 20 degrees Celsius.

When cooling the emulsion prior to acidification to the desired temperature at which the acidification is to take place this may be done at any pace. Preferably this is done at a fast pace, for example by rapid cooling in a Surface Scraped Heat Exchanger, as this prevents the entrapment of air thereby providing a firmer product.

The acidification is achieved using a chemical acidifying agent, i.e. chemical acidification. The chemical acidifying agent may be any food grade agent which may effect the lowering of the pH to the desired range, such as lactic acid and Glucono Delta Lactone (GDL). Preferably the acidifying agent is selected from the group consisting of citric acid, hydrochloric acid, acetic acid and combinations thereof. The speed of acidification, e.g. the speed at which the pH is lowered to the desired level, is not critical. However, fast acidification is preferred as this limits the process time and hence saves costs. Optionally, dairy flavors may be added to compensate for the loss of typical fermentation flavors.

After acidification the acidified emulsion is subjected to an emulsification step. The emulsification can be done according to the methods know in the art. Preferably a shear mixer or colloid mill is used. More preferably a homogenizer is used. The homogenization preferably is performed at a pressure between 25 and 900 bar, more preferably 50 and 400 bar and most preferably between 100 and 350 bar.

It may be preferred to subject the acidified emulsion to a heat treatment step after acidification but prior to emulsification. The heating up to a temperature equal to T as defined above is done at a rate of 0.1 degrees Celsius or less per second, preferably 0.08 degrees Celsius or less per second and more preferably 0.05 degrees Celsius or less per second.

Once the acidified emulsion has reached a temperature equal to T, the speed of heating to temperatures higher than T is not critical and may either be fast or slow. Fast heating is typically done at a rate of 20 degrees Celsius or more per second.

When the acidified emulsion has reached the desired temperature the acidified emulsion may be kept at that temperature for the appropriate time. It is not necessary to cool down the acidified emulsion prior to emulsification. It is even preferred to emulsify the acidified emulsion at elevated temperature and do a hot fill, i.e. fill and seal packages with the hot acidified emulsion, followed by cooling of the filled packages.

The emulsion according to the invention comprises from 5 to 40 wt% fat, preferably 15 to 35 wt% and more preferably from 20 to 35 wt%.

The fat is either vegetable fat or marine fat or a combination thereof; or a combination of dairy fat and at least one of a vegetable fat or a marine fat. If dairy fat is used, the amount is preferably below 70 wt%, more preferably below 50 wt%, calculated on the total weight of fat.

The emulsion according to the invention further comprises from 0.05 to 15 wt% protein, preferably from 1 to 10 wt% and more preferably from 1 to 6 wt%.

At least 25 wt% of the protein should come from milk powder, preferably at least 40 wt%, more preferably at least 50 wt% and most preferably at least 60 wt%. Preferably the milk powder is skimmed milk powder.

Preferably the milk powder has a casein protein content of at least 20 wt% (on total weight of milk powder), more preferably at least 25 wt% and most preferably at least 29 wt%.

The remaining protein, that is protein not from milk powder, may be chosen from any edible protein source. Preferably it is selected from the group consisting of soy protein, pea protein and other sources of milk protein like milk, butter milk powder, butter serum powder, whey, whey powder concentrate, whey protein isolate, caseinate and combinations thereof.

Optionally functional ingredients, e.g. a health promoting or otherwise beneficial agent, may be added to the emulsion and may be selected from a wide range compounds such as vitamins, antioxidants, omega-3 and omega-6 fatty acids or oils comprising such fatty acids (e.g. fish oil, algae oil), polyphenols, protein hydrolysate, plant sterol and esters thereof.

The emulsion according to the invention preferably is a spread. For the purpose of the invention the expression "spread" is intended to mean a plastic, spreadable product which can be applied onto bread at room temperature without tearing the bread. The spreads of the present invention have a Stevens value of 100 - 500 g at 5 degrees Celsius and 25 - 250 g at room temperature (about 20 degrees Celsius).

The invention is now illustrated by the following non limiting examples.

### Examples

### Method to determine the firmness (Stevens Value)

The firmness (also referred to as Stevens value) of the products is determined by measuring the force required to penetrate a cylindrical probe in the product at 5°C. The peak force (by custom expressed in gram, g; 1 g = 9.81 mN) is recorded. Sample height 5 cm; cylindrical probe of 0.5 inch thickness; compression rate 2 mm/s; penetration depth 10 mm. A suitable machine may be a Stable Micro Systems TA-XT2 Texture Analyser.

### Method to determine the texture, i.e. amount of perceivable grainy particles

The texture is a mouthfeel property, it is determined by tasting the products by a trained panel. The panelists are trained by tasting products with extreme graininess, ranging from very smooth to very grainy. The samples are offered as blind samples (no reference to their state of graininess). In a taste session panelists are presented with a set of samples and asked to rank them from least to most on graininess. R-index tables for ranking are used for analysis of ranking data. A minimum of 30 observations is required. The R-index method is described in: O'Mahony, M., Understanding discrimination tests: a user friendly treatment of response bias, rating and ranking R-index tests and their relationship to signal detection. Journal of Sensory Studies 7 (1992) P1-47.

### Method to determine solid fat content

The solid fat content (%) can be measured by a suitable analytical method such as NMR. The method used is low resolution NMR with Bruker Minispec apparatus. Reference is made to the Bruker minispec application notes 4,5 and 6.

The percentage of solid fat determined by the low resolution NMR technique is defined as the ratio of the response obtained from the hydrogen nuclei in the solid phase and the response arising from all the hydrogen nuclei in the sample. The product of this ratio and one hundred is termed the low resolution NMR solids percent. No correction is made for variations in the proton density between solid and liquid phase. The NMR solids percent for a sample measured at t °C was given the symbol Nt.

Suitable instruments adapted to determine the solids fat content are the Bruker Minispecs p20itm, pc20tm, pc120tm, pc120stm, NMS120tm and MQ20tm.

Stabilization and tempering procedure was as follows:
- melt fat at 80 °C
- 5 minutes at 60 °C
- about 1 day at 0 °C
- 30-35 minutes at each chosen measuring temperature.

Solid fat content as a function of temperature is called the n-line.

### Base composition of the emulsion

The following composition (Table 1) was used for the preparation of an edible water continuous acidified emulsion according to the different processes described below.

**Table 1, Base composition**

| Ingredient | Wt% (on total weight of product) |
|---|---|
| Whey Powder Concentrate (75% protein) | 1.75 |
| Skimmed Milk Powder (medium heat) | 6.25 |
| Locust Bean Gum | 0.3 |
| Potassium sorbate | 0.1 |
| Vegetable fat* | 22 |
| Gelatin | 0.7 |
| Salt | 0.3 |
| Citric Acid (anhydrate) | 0.4 |
| Demiwater | Up to 100% |

| | |
|---|---|
| * Vegetable fat with n-line of: N5: 30.5; N10: 25.5; N15: 18.5; N20: 12.2; N25: 7.4; N30: 3.5; N35: 0.4; N40: 0.0. | |

### Example 1 (low temperature chemical acidification, one homogenization step)

A separate solution of gelatin and salt in cold water is prepared in a non-stirred vessel with about 10% of the total amount of water used in the product, at room temperature. The Whey Powder Concentrate, Skimmed Milk Powder, Locust Bean Gum, Potassium sorbate are mixed in the remaining amount of water at 60 - 65°C in a stirred vessel. After about 10 minutes the fat is added and the premix is heated to 85°C and kept at this temperature for 15 minutes. Then the gelatin and salt solution is added. After cooling down to 6°C, by means of a Surface Scraped Heat Exchanger, the premix is acidified to a pH of 4.6 by adding the citric acid. After acidification the product is slowly heated to about 65°C over a period of one hour, then pasteurised by heating at 82°C for 90 seconds using a heat exchanger, followed by homogenisation at 77°C at 200 bar and filled in tubs at a temperature above 72°C and sealed. The tubs with product are permanently stored at 5°C. After approximately one week the products can be measured for firmness and used for taste sessions.

### Comparative A (high temperature chemical acidification, two homogenization steps)

The sequence of steps is the same as for the above example except that after addition of the gelatin and salt solution the whole premix is passed through a Silverson mixer, operated at 6000 rpm, model 150/250MS Multistage inline with Emulsion screen Fine, followed by homogenization at 200 bar. After the homogenization the premix is acidified at about 65°C followed by pasteurization, homogenization and hot filling, as mentioned above.

### Comparative B (high temperature chemical acidification, one homogenization step)

Identical processing as given for comparative A, except that the inline Silverson mixer and the (first) homogenization are skipped. After addition of the gelatin and salt solution, the premix is cooled down to 65°C and acified by adding the citric acid. After acidification the product is pasteurised, homogenised and hot filled, as mentioned above.

### Comparison

For Example 1, Comparative A and Comparative B the firmness and the texture was determined according to the methods described above. The results are summarized in Table 2.

As can be seen in Table 2, the product prepared according to the present invention (Example 1) is comparable with the product prepared using a process comprising two homogenization steps (Comparative A). While both Example 1 and Comparative B use a process with only one homogenization step, the product prepared according to the present invention has a better texture.

**Table 2, Product properties**

| | Example 1 | Comparative A | Comparative B |
|---|---|---|---|
| Firmness | 188 | 223 | 146 |
| Texture (sensory) | 3.7 | 2.4 | 6.0 |

## Claims

1. Process for the preparation of an edible water continuous acidified emulsion, wherein the process comprises the steps of the
(a) preparation of an emulsion comprising an aqueous phase, a fat phase and protein wherein at least 25 wt% of the protein is from milk powder;
(b) acidification of the emulsion obtained under (a) to a pH between 4.4 and 5.2 with a chemical agent at a temperature equal to or lower than T with a minimum of 0 degrees Celsius, wherein T=A + B*(pH-4.7) with a maximum of 20 degrees Celsius, wherein B=15 degrees Celsius for a pH from 4.4 up to and including 4.7, wherein B=45 degrees Celsius for a pH from 4.7 up to and including 5.2, and wherein A is from 10 to 5 degrees Celsius, preferably 8 to 5 degrees Celsius and most preferably 6 to 5 degrees Celsius;
(c) emulsification of the emulsion obtained under (b).

2. Process according to claim 1 wherein the acidified emulsion is subjected to a heat treatment step after acidification (step b) and prior to emulsification (step c), and wherein the heating up to a temperature equal to T as defined in claim 1 is done at a rate of 0.1 degrees Celsius or less per second.

3. Process according to claim 1 or 2 wherein the emulsion comprises from 5 to 40 wt% fat.

4. Process according to any one of claims 1 to 3 wherein in the fat is either vegetable fat or marine fat or a combination thereof;

5. Process according to any one of claims 1 to 3 wherein the fat is a combination of dairy fat and at least one of a vegetable fat or a marine fat.

6. Process according to any one of claims 1 to 5 wherein the emulsion comprises from 0.05 to 15 wt% protein.

7. Process according to any one of claims 1 to 6 wherein the emulsion is a spread.

8. Process according to any one of claims 1 to 7 comprising only one emulsification step.

9. Process according to any one of claims 1 to 8 wherein the emulsification is a homogenization.

## Patentansprüche

1. Verfahren für die Herstellung einer essbaren angesäuerten Emulsion mit kontinuierlicher wässriger Phase, wobei das Verfahren die folgenden Schritte umfasst:
(a) Herstellung einer Emulsion, die eine wässrige Phase, eine Fettphase und Protein umfasst, wobei wenigstens 25 Gewichts-% des Proteins aus Milchpulver stammen;
(b) Ansäuerung der unter (a) erhaltenen Emulsion auf einen pH zwischen 4,4 und 5,2 mit einem chemischen Mittel bei einer Temperatur von gleich oder niedriger als T mit einem Minimum von 0 Grad Celsius, wobei T=A + B*(pH-4,7), mit einem Maximum von 20 Grad Celsius, wobei B = 15 Grad Celsius für einen pH von 4,4 bis zu und einschließlich 4,7, wobei B = 45 Grad Celsius für einen pH von 4,7 bis zu und einschließlich 5,2, und wobei A von 10 bis 5 Grad Celsius, vorzugsweise 8 bis 5 Grad Celsius und am bevorzugtesten 6 bis 5 Grad Celsius ist;
(c) Emulgierung der unter (b) erhaltenen Emulsion.

2. Verfahren gemäß Anspruch 1, wobei die angesäuerte Emulsion nach Ansäuerung (Schritt b) und vor Emulgierung (Schritt c) einem Wärmebehandlungsschritt unterworfen wird und wobei das Erwärmen auf eine Temperatur von gleich T, wie in Anspruch 1 definiert, mit einer Rate von 0,1 Grad Celsius oder weniger pro Sekunde erfolgt.

3. Verfahren gemäß Anspruch 1 oder 2, wobei die Emulsion 5 bis 40 Gewichts-% Fett umfasst.

4. Verfahren gemäß einem der Ansprüche 1 bis 3, wobei in dem Fett entweder Pflanzenfett oder Seetierfett oder eine Kombination davon ist.

5. Verfahren gemäß einem der Ansprüche 1 bis 3, wobei das Fett eine Kombination aus Milchfett und wenigstens einem von Pflanzenfett und Seetierfett ist.

6. Verfahren gemäß einem der Ansprüche 1 bis 5, wobei die Emulsion 0,05 bis 15 Gewichts-% Protein umfasst.

7. Verfahren gemäß einem der Ansprüche 1 bis 6, wobei die Emulsion ein Aufstrich ist.

8. Verfahren gemäß einem der Ansprüche 1 bis 7, das nur einen Emulgierungsschritt umfasst.

9. Verfahren gemäß einem der Ansprüche 1 bis 8, wobei die Emulgierung eine Homogenisierung ist.

## Revendications

1. Procédé de préparation d'une émulsion acidifiée continue aqueuse comestible, lequel procédé comprend les étapes consistant en
(a) la préparation d'une émulsion comprenant une phase aqueuse, une phase grasse et une protéine dont au moins 25 % en poids de la protéine provient de lait en poudre ;
(b) l'acidification de l'émulsion obtenue dans l'étape (a) à un pH compris entre 4,4 et 5,2 avec un agent chimique à une température équivalente à ou inférieure à T, avec une valeur minimale de 0 degré Celsius, où T = A + B*(pH - 4,7) avec une valeur maximale de 20 degrés Celsius, où B = 15 degrés Celsius pour un pH de 4,4 et allant jusqu'à 4,7 inclus, où B = 45 degrés Celsius pour un pH de 4,7 et allant jusqu'à 5,2 inclus, et où A vaut de 10 à 5 degrés Celsius, de préférence de 8 à 5 degrés Celsius et idéalement de 6 à 5 degrés Celsius ;
(c) l'émulsification de l'émulsion obtenue dans l'étape (b).

2. Procédé selon la revendication 1, dans lequel l'émulsion acidifiée est soumise à une étape de traitement thermique après l'acidification (étape b) et avant l'émulsification (étape c), et dans lequel le chauffage à une température équivalente à T telle que définie dans la revendication 1 est réalisé à une vitesse inférieure ou égale à 0,1 degré Celsius par seconde.

3. Procédé selon la revendication 1ou 2, dans lequel l'émulsion comprend de 5 à 40 % en poids de matière grasse.

4. Procédé selon l'une quelconque des revendications 1 à 3, dans lequel la matière grasse est une matière grasse végétale ou une matière grasse marine ou une combinaison des deux.

5. Procédé selon l'une quelconque des revendications 1 à 3, dans lequel la matière grasse est une combinaison d'une matière grasse laitière et d'au moins une matière grasse végétale ou une matière grasse marine.

6. Procédé selon l'une quelconque des revendications 1 à 5, dans lequel l'émulsion comprend de 0,05 à 15 % en poids de protéine.

7. Procédé selon l'une quelconque des revendications 1 à 6, dans lequel l'émulsion est une pâte à tartiner.

8. Procédé selon l'une quelconque des revendications 1 à 7, comprenant uniquement une étape d'émulsification.

9. Procédé selon l'une quelconque des revendications 1 à 8, dans lequel l'émulsification est une homogénéisation.
